# EUROPEAN PATENT APPLICATION

(11) **EP 4 557 662 A1**
(43) Date of publication of application: **21.05.2025**
(21) Application number: 23210633.6
(22) Date of filing: 17.11.2023
(51) Int. Cl.: H04L 9/40, H04L 9/32, G06F 21/64, G06Q 50/04

(54) **TRUSTWORTHY DIGITAL PROOF ATTESTING AT LEAST ONE DYNAMIC ATTRIBUTE OF A PRODUCT**

(71) Applicant: Siemens Aktiengesellschaft, 80333 München (DE)
(72) Inventor: Rauh, Nina, 91054 Erlangen (DE); Seltzsam, Stefan, 85653 Aying (DE); Wimmer, Martin, 85579 Neubiberg (DE)
(74) Representative: Siemens Patent Attorneys

(57) **Abstract**

A computer implemented method for providing a trustworthy digital proof attesting at least one dynamic attribute of a product, comprising the steps of:
- generating (S1), by a manufacturer unit (11), a first proof data (15, 20) comprising:
• a product identifier identifying the product, and
• at least one dynamic attribute (23) about the product, comprising a first link (FLK) referring to a second proof data (16, 30), the second proof data (16, 30) being located outside of the first proof data (15, 20), the second proof data (16, 30) being retrievable using the first link (FLK), the second proof data (16, 30) is exchangeable during the life cycle of the product, the second proof data (16, 30) containing an up-to-date information (32) concerning the dynamic attribute (23), a second link (SLK) back to the first proof data (15, 20), and the second proof data (16, 30) being certified with a second certification data element (33) by a second certification unit (13),

- amending (S2) the first proof data (15, 20), by a first certification unit (12), with a first certification data element (25) certifying the content of the first proof data (15, 20), and
- transferring (S3), the first proof data (15, 20) related to the product from the manufacturer unit (11) to a customer unit (14).

## Description

### Field of the invention

This invention relates to the field of data privacy and security, specifically to a computer implemented method, a computer program product, a data processing unit for providing a trustworthy digital proof attesting at least one dynamic attribute of a product, and a data storage media containing a data structure adapted for storing a first proof data being a trustworthy digital proof.

### Background of the invention

Nowadays, information about different parameters concerning the manufacturing of a product have to be traced and published. One example is the information about a product carbon footprint (PCF) of the product, i.e., the CO2 emissions which are generated along the full supply chain during manufacturing of the product including upstream emissions and own emissions, which become increasingly important for product compliance with regulatory rules and customers' purchasing decisions. Emissions can be offset by the purchase of carbon dioxide certificates. Throughout the document, the abbreviation CO2 will be used as synonym for carbon dioxide, the abbreviation PCF will be used as synonym for product carbon footprint.

The emissions offset usually must not be subtracted from the emission value but must be reported separately. CO2 certificates are used to confirm the offsetting of greenhouse gas emissions like CO2 through additional climate protection projects that, e.g., avoid emissions, reduce emissions, or remove carbon emissions, e.g., afforestation, ecosystem restoration, or carbon capture and storage.

Customers or authorities are usually interested in trustworthy information, and this not only about the product carbon footprint (PCF) but also about projects which have been used for offsetting CO2 emissions of the product.

There are several solutions available to bind products and CO2 certificates.
One solution is putting the product names and serial numbers of specific product instances into the CO2 certificates that have been used for the offsetting of these specific product instances. Another binding solution is putting product names/IDs and information about production periods into the CO2 certificates that have been used for the offsetting of these specific instances. Both solutions have the disadvantage that a manufacturer must publish information about product details like serial numbers which might lead to inference of information that the manufacturer did not want to share consciously like production quantity, production output, or production downtimes. If the planned production quantity in the production period is not met, either CO2 certificates are wasted or there are not enough CO2 certificates to offset the CO2 emissions if more items have been produced than planned.

The CO2 emissions are only used as a prominent example. The described problem and solution are not limited to this particular use case and can also be used for many other data of products along the supply chain where statements - also named claims - are made and must be verifiable later.

Therefore, it is the object of the present application to provide a solution to issue a trustworthy proof which attests information about the product without inferring details of the production of the product, and wherein at least parts of the information can be adapted during the lifetime of the trustworthy proof.

In particular, it is the object to update parts of the information about CO2 offsetting during the lifetime of the PCF proof, i.e., after it has been issued, without disclosing information that can be used to infer additional corporate proprietary information that should be kept secret.

This object is solved by the features of the independent claims. The dependent claims contain further developments of the invention.

A first aspect concerns a computer implemented method for providing a trustworthy digital proof attesting at least one dynamic attribute of a product, comprising the following steps. Generating, by a manufacturer unit, a first proof data comprising:
- a product identifier identifying the product, and
- at least one dynamic attribute about the product, comprising a first link referring to a second proof data, the second proof data being located outside of the first proof data, the second proof data being retrievable using the first link, the second proof data is exchangeable during the life cycle of the product, the second proof data containing an up-to-date information concerning the dynamic attribute, a second link back to the first proof data, and the second proof data being certified with a second certification data element by a second certification unit.

The first proof data is amended by a first certification unit with a first certification data element certifying the content of the first proof data. Then, the first proof data related to the product is transferred from the manufacturer unit to a customer unit.

The first proof is correlated with the second proof by the first link and binds therefore the dynamic attribute of the product to the second proof data. On the other hand, the second proof data is exchangeable and can therefore be adapted without issuing a new first proof data. As the second proof itself is certified the provided information is trustworthy. Therefore, the method fulfills all established objectives.

In a further embodiment the first certification data element is verified by the customer unit, and if the verification is successful, the first certification data element attests the attributes being part of the first proof data and the correctness of the first link referring to the second proof data.

This enables the customer unit to verify not only the first proof data but also the link to the second proof.

In a further embodiment the second certification data element is verified by the customer unit and attests the content of the second proof data only.

This decouples the certification of the second proof data from the first proof data and therefore allows for instance an exchange or modification of the second proof data during the life cycle of the first proof data. The verification of the second proof attesting the content of the second proof data reduces/minimizes the risk of inference of data that was intentionally not shared by the manufacturer as only limited information have to be provided via the dynamic attribute itself.

In a further embodiment the first link is relayed to a summary data providing a human-readable summary of the up-to-date information concerning the at least one dynamic attribute about the product, and a third link referring to the second proof data.

This enables the customer unit to provide, e.g., display, an overview of information concerning the dynamic attribute in a comprehensive, human-readable way and at the same time provides references to details about the dynamic attribute.

In a further embodiment the first link, the second link and the third link are provided by a uniform resource identifier (URI) .

This provides flexible distribution and storage of the second proof data across different servers and locations.

In a further embodiment the up-to-date information concerning the at least one dynamic attribute of a product is verifiable by following the first link in the first proof data and/or by following the third link in the summary data by the customer.

The verification is thus combined and facilitated. All information about the at least one dynamic attribute and its up-to-date information can easily and efficiently be looked up by following the chain of links.

In a further embodiment the first proof data comprises at least one static attribute of the product, providing an information which remains unchanged during the life cycle of the first proof data.

This enables the provision of further information contained in the static attribute which is certified by the first certification unit and verifiable by the customer unit. The static information contains information which is related or unrelated to the dynamic attribute.

In a further embodiment the at least one static attribute is a total amount of carbon dioxide which was emitted during the production of the product including the carbon dioxide which was emitted during the production of all components contained in the product.

Optionally, for this static information a first proof data attesting a specific value of the product carbon footprint for the product is issued separately from potential further dynamic information.

In a further embodiment the at least one dynamic attribute indicates guarantees on how the manufacturer is going to offset the generated carbon dioxide and to which extent.

This avoids wasting CO2 certificates as well as over-promising the CO2 offsetting for a product, because the CO2 offsetting is handled as a dynamic parameter, which can be updated, e.g., the amount of carbon dioxide certificates used to meet the guaranteed offsetting can be increased during the life cycle of the first proof data and therefore cover additionally manufactured products. Thus, the same first proof data can be presented to customer units for the additionally manufactured products.

In a further embodiment the second proof data comprises a current status of the dynamic attribute describing the manufacturer's guarantees about carbon dioxide compensation by indicating at least one carbon dioxide offset project and its contribution to an at least one carbon dioxide offset value.

In a further embodiment the current status of the dynamic attribute describing the manufacturer's guarantees about carbon dioxide compensation is certified by the second certification unit without requiring an update of the first certification data element of the first proof data.

In a further embodiment the manufacturer unit collects information about the product during manufacturing, generates up-to-date information depending on the collected information, and provides the up-to-date information to the second certification unit for being certified.

Gathering information about CO2 emissions and CO2 offsetting along the supply chain of a product is simple and efficient. The first proof data, i.e., the PCF proofs, are reusable for e.g., all instances of products of a product batch, and reduces the number of PCF proofs that must be created, signed, and issued to the customer unit.

A second aspect concerns a data storage medium containing a data structure adapted for storing a first proof data being a trustworthy digital proof attesting at least one dynamic attribute about a product, the data structure comprising:
- a product identifier identifying the product, and
- at least one dynamic attribute about the product, comprising a first link referring to a second proof data, the second proof data being located outside of the first proof data, the second proof data being retrievable using the first link, the second proof data is exchangeable during the life cycle of the product, the second proof data containing an up-to-date information concerning the dynamic attribute, a second link back to the first proof data, and the second proof data being certified with a second certification data element by a second certification unit, and
- a first certification data element of the first certification unit certifying the content of the first proof data.

The first proof data contained in the data storage medium provides flexible proofs, that are not fully static anymore but have at least one externalized part that can be modified dynamically. These dynamic parts are flexibly accessible using links, e.g., Uniform Resource Identifier (URI).

A third aspect of the invention concerns a data processing system comprising means for carrying out the steps of the method as described above, wherein the system comprises a manufacturer unit, a first certification unit and a second certification unit.

The data processing system allows to issue verifiable digital proofs in a resource optimized way by reducing the number of proofs which have to be issued for several products and with that saving the resources for communication between the manufacturer unit and the first certification unit.

A fourth aspect of the invention concerns a computer program product comprising instructions which, when the program is executed by a computer, cause the computer to carry out the steps of the method described above.

The details of one or more embodiments are set forth in the accompanying drawings and the description below. Other features will be apparent from the description and drawings, and from the claims.

### Brief description of the Drawings

- Fig. 1: illustrates an embodiment of the inventive method by a flow chart.
- Fig. 2: schematically illustrates an embodiment of the inventive data processing system.
- Fig. 3: schematically shows an embodiment of inventive first data proof and the linked second data proof.

It is noted that in the following detailed description of embodiments, the accompanying drawings are only schematic, and the illustrated elements are not necessarily shown to scale. Rather, the drawings are intended to illustrate functional units of components and the co-operation of these functional units. Here, it is to be understood that any connection or coupling of functional units, products, components or other physical or functional elements could also be implemented by an indirect connection or coupling, e.g., via one or more intermediate elements. A connection or a coupling of elements or components or products can for example be implemented by a wire-based, a wireless connection and/or a combination of a wire-based and a wireless connection or any other means.

Functional units can be implemented by dedicated hardware, e.g., at least one processor, by firmware or by software, and/or by a combination of dedicated hardware and firmware and software. It is further noted that each functional unit described for an apparatus can perform a functional step of the related method and vice versa.

### Detailed description of the invention

In the context of this invention, a "manufacturing unit" is an apparatus comprising at least one processor performing data modifications to execute actions of the manufacturer. The "Manufacturer" represents an entity, someone or something, like a company or individual, that has certain confidential or sensitive information. It holds onto this data and can choose when and how they want to share it with others. It might have this data because of their position in a transaction, its role in a supply chain, or simply because it generated or collected this information. The goal of the "Manufacturer" is to control and manage the release or sharing of this information in a way that is secure and respects privacy.

Similarly, a "certification unit" is an apparatus comprising at least one processor performing data modifications to execute actions of a certifier. The "Certifier" represents an entity (e.g., attestation authority), which could be an organization or a specialized authority, responsible for attesting or certifying specific pieces of information. The certifier essentially provides a layer of trust, ensuring that the data or information they certify is genuine and trustworthy. When others see data or credentials from a recognized certifier, they can be more confident in its authenticity and trustworthiness.

A "customer unit" is an apparatus comprising at least one processor performing data modifications to execute actions of a customer. A "customer" represents an entity or individual that assesses or checks the validity and authenticity of the provided information, i.e., a trustworthy digital proof. They are essentially the recipients of the data, who need assurance regarding its legitimacy. The customer relies on the credentials provided by the certification unit to confirm that the information they receive, such as from a manufacturer unit, is genuine and unchanged. In many scenarios, the customer may require such information to make informed decisions or undertake specific actions. For instance, in a business context, a company may act as a customer unit to check the validity and credibility of a manufacturer unit's claims before entering into a contract.

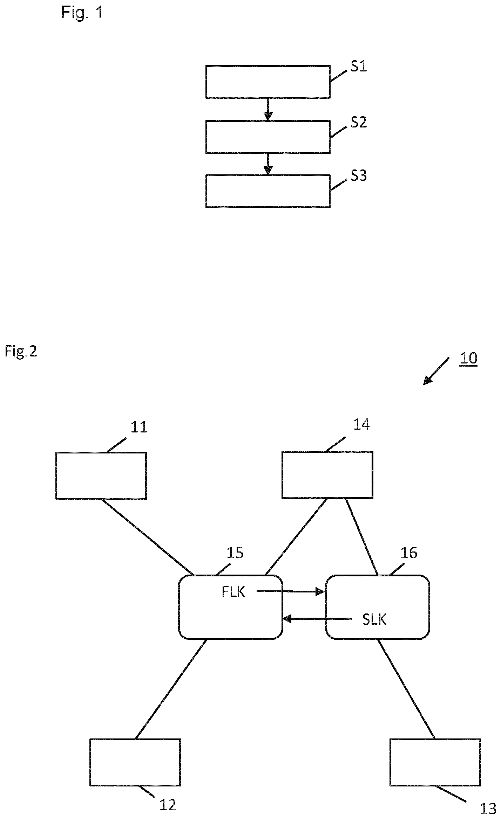

An embodiment of the inventive method which provides a trustworthy digital proof attesting at least one dynamic attribute of a product is illustrated in Fig. 1 and described in more detail below:
In a first step S1 a first proof is generated by the manufacturer unit. The generated first proof data comprises a product identifier which identifies the product for which the first proof data is issued. The product identifier represents a single product, e.g., a type of product and/or a serial number of the product or a set of products, e.g., a batch number or a range of serial numbers of products.

Additionally, the generated first proof data comprises at least one dynamic attribute about the product. The dynamic attribute comprises a first link referring to a second proof data.

The second proof data is located outside of the first proof data, e.g., it is provided by a remote server or repository. The second proof data is retrievable by the first link. The second proof data is exchangeable during the life cycle of the product and contains an up-to-date information concerning the dynamic attribute. The second proof data comprises a second link which refers back to the first proof data providing an easily and efficient way to look up all related information. The second proof data is certified with a second certification data element provided by a second certification unit.

The generated first proof data is amended with a first certification data element certifying the content of the first proof data, see step S2. The first certification data element is provided by a first certification unit. In an embodiment the first and second certification unit are identical, i.e., the first and second certification data element are provided by the same certification unit. This first proof data, which is related to the product identified by the product identifier is now transferred from the manufacturer unit to a customer unit, see step S3.

The first proof data can be implemented as a signed PDF document or digitally signed documents of any format, like extensible Markup Language (XML), JSON Web Token (JWT), Selective Disclosure-JSON Web Token (SD-JWT) and can for instance comply with the format for Verifiable Credentials (VC). The first proof data can be registered using a distributed ledger technology.

The first certification unit who signs the first proof data, i.e., who signs the PDF document or issues a Verifiable Credential can be different parties. In one embodiment the first certification unit is the manufacturer unit. A first certification data element issued by the manufacturer unit is verifiable but provides only low trust as it is a self-certification. Customer units might be willing to put some limited trust into these documents. In a preferred embodiment, the first certification unit is an independent trusted authority, such as DEKRA or TUV SUD to improve the trustworthiness a customer unit puts into it.

The first link is relayed to a summary data providing a human-readable summary of the up-to-date information concerning the at least one dynamic attribute about the product, and a third link referring to the second proof data. The first link, the second link and the third link are provided by a uniform resource identifier. The up-to-date information concerning the at least one dynamic attribute of a product is verifiable by following the first link in the first proof data and/or by following the third link in the summary data. Optionally, the first proof data comprises at least one static attribute of the product, providing an information which remains unchanged during the life cycle of the first proof data.

Fig. 2 schematically shows an embodiment of a data processing system 10. The data processing system 10 comprises a manufacturing unit 11, a first certification unit 12 and a second certification unit 13. The manufacturing unit 11 is configured to generate a first proof data 15. The first certification unit 12 is configured to certify the first proof data 15 by amending it with a first certification data. The second certification unit 13 is configured to certify the second proof data 16 by amending it with a second certification data.

The first certification data element is verified by a customer unit 14, and if the verification is successful, the first certification data element attests the attributes being part of the first proof data 15 and the correctness of the first link referring to the second proof data 16. The second certification data element is verified by the customer unit 14 and attests the content of the second proof data 16 only. A first link FLK contained in the first proof data 15 links the first proof data 15 to the second proof data 16. Vice versa, the second link SLK refers to the first proof data 15.

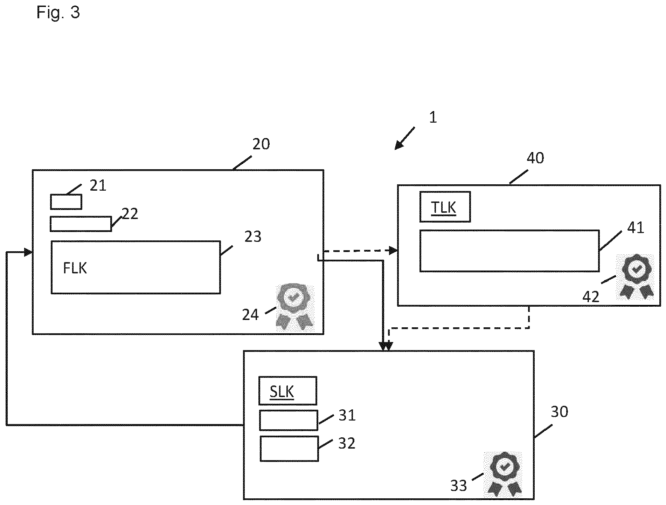

A data structure of a first proof data 20 which is contained in a data storage medium is shown in Fig. 3.

The first proof data 20 comprises a product identifier 21, at least one dynamic parameter 23 comprising a first link FLK, which provides access to a second proof data 30, and a first certification data element 24. Optionally the first proof data 20 comprises at least one static attribute 22, which remains unchanged over the life cycle of the first proof data. The first link FLK connects the first proof data 20 with the second proof data 30, see solid arrow. The second proof data 30 comprises a second link SLK, a status information 31, up-to-date information 32 and a second certification data element 33. In an embodiment the first link FLK links to a summary data 40, see dashed arrow, which provides a human-readable summary of up-to-date information 41 concerning the at least one dynamic attribute 23, a third link TLK referring to the second proof data 30 and a third certification element 41.

The content and interrelation of the first proof data 20 and the second proof data 30 is described for the use case of providing a PCF proof attesting a product carbon footprint of a product. The at least one static attribute 22 provides a total amount of carbon dioxide which was emitted during the production of the product including the carbon dioxide which was emitted during the production of all components contained in the product. The carbon dioxide emission is measured via a sensor during manufacturing or is provided by a supplier unit manufacturing a component of the product.

The at least one dynamic attribute 23 indicates guarantees how the manufacturer is going to compensate certain amounts of carbon dioxide indicated by the static attribute. The second proof data 30 comprises a current status of the dynamic attribute 23 describing the fullfillment of the manufacturer's guarantees about carbon dioxide compensation by indicating at least one carbon dioxide offset project and its contribution to at least one carbon dioxide offset value. The current status 31 of the dynamic attribute 23 describing the manufacturer's guarantees about carbon dioxide compensation is certified by the second certification unit without requiring an update of the first certification data element 24 of the first proof data 20.

The manufacturer unit collects PCF information about the product during manufacturing, generates up-to-date information depending on the collected information, and provides the up-to-date information to the second certification unit for being certified.

The first proof data 20 providing the PCF proof is not fully static anymore but has at least one externalized part provided in the second proof data 30 that can be modified dynamically. The externalized part can be requested using the first link FLK, which preferably has the structure of a Uniform Resource Identifier (URI).

The first proof data 20 representing the PCF proof, comprises an identifier of the product, e.g., a product name or product ID and one or a subset of dedicated instances of the product. The subset of instances of products can be represented, e.g., by a batch number or a range of identifiers for the subset of instances.

The first proof 20 provides at least one of following data in the dynamic attribute 23:
- A claim of the manufacturer about offsetting the forementioned CO2 emissions using absolute values (e.g., 14.5 kg) or as percentage (e.g., 100%). It includes a statement indicating which CO2 emissions are the basis for the percentage, e.g., own emissions, upstream emissions, total production emissions cradle to gate, and similar. Upstream emissions are generated during manufacturing of components of the product or by transport of components, before the assembly of the final product.
- A minimal quality of the climate protection projects used to offset, e.g., "Gold certified standard". If more than one minimal standard should be used the contribution of each quality is included, e.g., "min. 60% Gold standard certified, 40% Verra certified".
- A reference to dynamic, externalized CO2 offset data provided by the first link FLK using, e.g., a Uniform Resource Identifier (URI) to indicate where up-to-date information 32 about CO2 offsetting can be requested. The up-to-date information 32 is at least one offsetting proof provided by the second proof data 30, to make the dynamic attribute 23 of the PCF proof verifiable. Each of the at least one second proof data 30 contains a status 31 and a second link SLK to the corresponding PCF proof 20.

Additionally, the first proof data 20 includes certification items that are attested by the first certification unit, e.g., the following:
- That the process of the manufacturer is sound on how to make sure that the offsetting claims are met.
- That the manufacturer has an appropriate strategy to ensure that the stated claim, e.g., "X% of the PCF is compensated by offsetting projects of the minimum quality Q_min" can be made. This includes, e.g.,
   o a plausible estimation of production quantities,
   o the company has already reserved/procured sufficient buffer credits, which can be decommissioned as soon as the products are delivered, which fulfill Q_min,
   o the company has the financial reserves to procure credits if more products are sold than estimated or ensures that it will no longer sell products with this claim as soon as the amount has been used up,
   o the company has taken enough reduction effort to justify the use of carbon credits.
- That the second certification unit regularly checks whether enough CO2 certificates have been retired by the manufacturer to offset the CO2 emissions and to meet the claims.

For instance, this information is included in further static attributes 22 of the first proof data 20.

The manufacturing unit manages information about CO2 offsetting and keeps it up-to-date and follows their process to ensure correct CO2 offsetting. This information is required by the first certification unit to attest CO2 offsetting according to the claims mentioned above and partially for the customer unit if it requests data about CO2 offsetting using the URI embedded into a PCF proof.

This information managed by the manufacturing unit includes one or more of the following:
Data about the CO2 offsetting provider, a number / amount of offsets, the first link FLK to the CO2 offsetting certificate, i.e., the second proof data, information about a retirement of the CO2 offsetting, a quality of the certificate, the project name and ID of the climate protection project and further more.

Using this information, a first certification unit can create, issue, and sign an Offsetting proof, here second proof data 30, that contains actual information about the CO2 offsetting of the product, e.g.:
- A reference to the corresponding PCF proof, provided by the second link SLK.
- List of offset providers usually without an absolute value for amount offset, but rather a distribution in percent of climate projects including Project ID and quality of the projects, provided as up-to-date information 32.
- A status 31 of the offsetting, e.g.,
   o a Claim, e.g., the CO2 offsetting claim, is stated by the manufacturing unit, as described above, but concrete CO2 offsetting was not yet attested by the certifier.
   ∘ Intermediary, e.g., the correct CO2 offsetting is certified for all products produced before a certain date.
   ∘ Final, e.g., the correct CO2 offsetting for all products is certified and no more instances of the product are manufactured afterwards.

Please note that the second certification unit must check not only the amount of the CO2 offsetting, but also
∘ If purchased CO2 offsets have the quality which is stated in the claim.
∘ If purchased CO2 offsets have been retired to compensate product emissions.
∘ If retired CO2 offsets have not been used twice. Certifier and manufacturer can align on a process to ensure that, e.g., by adding specific information to a retired CO2 offset certificate that uniquely identifies what it was used for. Only manufacturer and certifier must be able to interpret this uniquely to avoid information leakage/possibility of information inference.

When the customer unit retrieves a PCF proof, i.e., first proof data 20 for the product, the customer unit must be able to verify the integrity of the data e.g., by validating the digital signature of the manufacturer unit and/or certification unit or verifying a Verifiable Credential.

When the customer unit requests data about CO2 offsetting using the first link FLK in the PCF proof, i.e., first proof data 20 the manufacturer unit or a service provider on behalf of the manufacturer unit must use the up-to-date information 32 about CO2 offsetting of the respective product to generate an up-to-date overview of the CO2 offsetting projects for the customer unit. As the summary of up-to-date information 41 cannot be verified, this summary data 40 also includes information about how an up-to-date Offsetting proof can be retrieved. In an embodiment, this information is provided by a third link TLK. Optionally, the summary data 40 is also certified with a third certification element.

Data that could be used to infer information will not be presented to the customer unit. This data is only available to first and/or second certification unit.

All information about the full picture of the CO2 emissions and offsetting can easily and efficiently be looked up by following the chain: From the PCF proof using the first link FLK to the externalized dynamic part of PCF proof, i.e., second proof data. From the second proof data back to the first proof data via the second link SLK.

The first proof data / PCF proof is reusable for all instances of a product batch, and therefore reduces the number of requests to suppliers and thus the effort to manage, store, long-time archive this data. It further reduces the number of PCF proofs that must be created, issued, and signed for customer units. Further on, effort is reduced if certificates must be revoked. Thus, gathering information about CO2 emissions and CO2 offsetting along the supply chain of a product is simple and efficient. The risk of inference of data that was not intentionally shared be the manufacturer is reduced/minimized as only limited data is shared with SaaS providers.

It is to be understood that the above description of examples is intended to be illustrative and that the illustrated components are susceptible to various modifications. For example, the illustrated concepts could be applied for different technical systems and especially for different subtypes of the respective technical system with only minor adaptions.

## Claims

1. A computer implemented method for providing a trustworthy digital proof attesting at least one dynamic attribute of a product, comprising the steps of:
- generating (S1), by a manufacturer unit (11), a first proof data (15, 20) comprising:
• a product identifier identifying the product, and
• at least one dynamic attribute (23) about the product, comprising a first link (FLK) referring to a second proof data (16, 30), the second proof data (16, 30) being located outside of the first proof data (15, 20), the second proof data (16, 30) being retrievable using the first link (FLK), the second proof data (16, 30) is exchangeable during the life cycle of the product, the second proof data (16, 30) containing an up-to-date information (32) concerning the dynamic attribute (23) and a second link (SLK) back to the first proof data (15, 20), and the second proof data (16, 30) being certified with a second certification data element (33) by a second certification unit (13),
- amending (S2) the first proof data (15, 20), by a first certification unit (12), with a first certification data element (25) certifying the content of the first proof data (15, 20), and
- transferring (S3), the first proof data (15, 20) from the manufacturer unit (11) to a customer unit (14).

2. Computer implemented method according to any of the preceding claims, wherein the first certification data element (25) is verified by the customer unit (14), and if the verification is successful, the first certification data element (25) attests the attributes being part of the first proof data (15, 20) and the correctness of the first link (FLK) referring to the second proof data (16, 30).

3. Computer implemented method according to claim 2, wherein the second certification data element (33) is verified by the customer unit (14) and attests the content of the second proof data (16, 30) only.

4. Computer implemented method according to any of the preceding claims, wherein the first link (FLK) is relayed to a summary data (40) providing a human-readable summary of the up-to-date information (32) concerning the at least one dynamic attribute (23) about the product, and a third link (TLK) referring to the second proof data (16, 30).

5. Computer implemented method according to claim 1, wherein the first link (FLK), the second link (SLK) and the third link (TLK) are provided by uniform resource identifiers.

6. Computer implemented method according to claim 5, wherein the up-to-date information (32) concerning the at least one dynamic attribute (23) of a product is verifiable by following the first link (FLK) in the first proof data (15, 20) and/or by following the third link (TLK) in the summary data (40).

7. Computer implemented method according to any of the preceding claims, wherein the first proof data (15, 20) comprises at least one static attribute (22) of the product, providing an information which remains unchanged during the life cycle of the first proof (15, 20)

8. Computer implemented method according to claim 7, wherein the at least one static attribute is a total amount of carbon dioxide which was emitted during the production of the product including the carbon dioxide which was emitted during the production of all components contained in the product.

9. Computer implemented method according to claim 7 or 8, wherein the at least one dynamic attribute (23) indicates guarantees on how a manufacturer is going to offset the generated carbon dioxide and to which extent.

10. Computer implemented method according to claim 9, wherein the second proof data (16, 30) comprises a current status of the dynamic attribute (23) describing the manufacturer's guarantees about carbon dioxide compensation by indicating at least one carbon dioxide offset project and its contribution to at least one carbon dioxide offset value.

11. Computer implemented method according to claim 10, wherein the current status of the dynamic attribute describing the manufacturer's guarantees about carbon dioxide compensation is certified by the second certification unit (13) without requiring an update of the first certification data element (25) of the first proof data (15, 20).

12. Computer implemented method according to any of the preceding claims, wherein the manufacturer unit (11) collects information about the product during manufacturing, generates up-to-date information (32) depending on the collected information, and provides the up-to-date information (32) to the second certification unit (13) for being certified.

13. Data storage medium containing a data structure (1) adapted for storing a first proof data (15, 20) being a trustworthy digital proof attesting at least one dynamic attribute (23) about a product, the data structure (1) comprising:
• a product identifier identifying the product, and
• at least one dynamic attribute (23) about the product, comprising a first link (FLK) referring to a second proof data (16, 30), the second proof data (16, 30) being located outside of the first proof data (15, 20), the second proof data (16, 30) being retrievable using the first link (FLK), the second proof data (16, 30) is exchangeable during the life cycle of the product, the second proof data (16, 30) containing an up-to-date information (32) concerning the dynamic attribute (23), a second link (SLK) back to the first proof data (15, 20), and the second proof data (16, 30) being certified with a second certification data element (33) by a second certification unit (13), and
• a first certification data element (25) of the first certification unit (12) certifying the content of the first proof data (15, 20).

14. A data processing system comprising means for carrying out the steps of the method according to any one of claims 1 to 12, wherein the system comprises a manufacturing unit (11), a first certification unit (12) and a second certification unit (13).

15. A computer program product comprising instructions which, when the program is executed by one or more computers, cause the one or more computers to carry out the steps of the method according to any one of claims 1 to 12.
